# EUROPÄISCHE PATENTSCHRIFT

(11) **EP 1 789 661 B1**
(45) Veröffentlichungstag und Bekanntmachung des Hinweises auf die Patenterteilung: **03.09.2008**
(21) Anmeldenummer: 05783753.6
(22) Anmeldetag: 13.09.2005
(51) Int. Cl.: F01N 3/021, F01N 3/035, F01N 3/28

(54) **ABGASANLAGE EINES KFZS MIT DIESELMOTOR**
EXHAUST GAS SYSTEM OF A MOTOR VEHICLE WITH A DIESEL ENGINE
SYSTEME D'ECHAPPEMENT D'UN VEHICULE A MOTEUR DIESEL

(30) Priorität: 17.09.2004 DE 102004045178; 26.01.2005 DE 202005001257 U
(43) Veröffentlichungstag der Anmeldung: 30.05.2007
(73) Patentinhaber: ArvinMeritor Emissions Technologies GmbH, 86154 Augsburg (DE)
(72) Erfinder: RANALLI, Marco, 86161 Augsburg (DE)
(74) Vertreter: Kitzhofer, Thomas
(86) Internationale Anmeldenummer: PCT/EP2005/009821
(87) Internationale Veröffentlichungsnummer: WO 2006/029808

(56) Entgegenhaltungen:
- EP-A- 1 260 684
- EP-A- 1 353 046
- US-A- 4 887 427
- PATENT ABSTRACTS OF JAPAN Bd. 2002, Nr. 04, 4. August 2002 (2002-08-04) & JP 2001 355431 A (ISUZU MOTORS LTD), 26. Dezember 2001 (2001-12-26)
- PATENT ABSTRACTS OF JAPAN Bd. 2002, Nr. 02, 2. April 2002 (2002-04-02) & JP 2001 295627 A (HINO MOTORS LTD), 26. Oktober 2001 (2001-10-26)
- PATENT ABSTRACTS OF JAPAN Bd. 009, Nr. 070 (M-367), 30. März 1985 (1985-03-30) & JP 59 201916 A (MITSUBISHI JIDOSHA KOGYO KK), 15. November 1984 (1984-11-15)
- PATENT ABSTRACTS OF JAPAN Bd. 008, Nr. 284 (M-348), 26. Dezember 1984 (1984-12-26) & JP 59 150918 A (HITACHI SEISAKUSHO KK), 29. August 1984 (1984-08-29)

## Beschreibung

Die Erfindung betrifft eine Abgasanlage eines Kfzs mit Dieselmotor, die eine Partikelfiltereinheit aufweist, gemäß dem Oberbegriff des Anspruch 1.

Derartige Partikelfilter, vereinfacht auch Rußfilter genannt, sollen die partikelförmigen Emissionen der Abgase reduzieren. Die Partikelfiltereinheiten haben als Kernstück ein Substrat, insbesondere aus SiC, welches in einem eigenen Außengehäuse untergebracht ist, wobei die Abgasrohrleitung stromabwärts und stromaufwärts der Partikelfiltereinheit in das Gehäuse mündet. Der Partikelfiltereinsatz selbst, d.h. das Substrat, muß von Zeit zu Zeit regeneriert werden, indem die auf der Filteroberfläche angesammelten Partikel abgebrannt werden. Eine der vielversprechendsten Möglichkeiten der Regeneration besteht darin, unmittelbar vor der Partikelfiltereinheit Kraftstoff in das Abgas einzuleiten, möglichst in Dampfform, unter anderem um das Abgas nicht zu stark abzukühlen. Dies ist beispielsweise in der EP 1 369 557 A1 beschrieben.

Darüber hinaus gibt es Bestrebungen, die Partikelfiltereinheiten kostengünstiger zu gestalten. Die hohen Kosten der Partikelfiltereinheiten ergeben sich beispielsweise durch das sehr teure SiC-Material des Substrats und durch die aufwendige Lagerung des Substrats über Lagermatten im Außengehäuse der Dieselpartikelfiltereinheit. Was die Einbindung in das Gehäuse anbelangt, so liegt der Aufwand unter anderem darin, daß die Partikelfiltereinheiten wegen des NO₂-Oxidationseffekts möglichst nahe an dem Motor angebracht werden sollen oder mit Heizeinrichtungen versehen sind. Der NO₂-Oxidationseffekt besteht darin, daß Kohlenstoff mit dem NO₂ im Abgas bei Temperaturen oberhalb 230°C oxidiert, wobei Stickstoff und CO₂ entsteht. Dieser im Vergleich zur Verbrennung mit Sauerstoff weniger effektive Regenerationseffekt soll aber in der Partikelfiltereinheit ausgenutzt werden. Ordnet man allerdings die Partikelfiltereinheit motornah an, so sind aufgrund der hohen Schwingungen im motornahen Abschnitt der Abgasanlage extreme Anforderungen bezüglich der Lagerung des Substrats und der Haltbarkeit von Substrat und Gehäuse zu erfüllen. Darüber hinaus ist in der Abgasanlage nahe des Motors wenig Platz für die voluminösen Partikelfiltereinheiten vorgesehen. Es gibt folglich ein Bündel von sich teilweise widersprechenden und auf den ersten Blick ausschließenden Faktoren bezüglich der Ausführung und Anordnung der Partikelfiltereinheit im Hinblick auf eine kostengünstigere Ausbildung.

Ideen, in der Partikelfiltereinheit selbst, d.h. im selben Außengehäuse, einen Haupt- und einen Vorfilter unterzubringen, sind z.B. aus der US 5 053 062 und der EP 1 205 228 A1 sowie der EP 0 957 241 A1 bekannt. Diese Ideen sorgen aber nicht für eine wirklich deutliche Verringerung der Kosten einer Partikelfiltereinheit oder für eine deutlich vereinfachte Unterbringung der Abgasanlage im Fahrzeug.

Aus der gattungsbildenden EP 1 353 046 A1 ist eine Abgasanlage bekannt, bei der ein motornaher Dieselpartikelfilter für ausschließlich große Partikel vorgesehen ist sowie ein zweiter, entfernter Partikelfilter für kleine Partikel. Damit soll es möglich werden, die größeren Partikel bei den höheren Temperaturen nahe des Motors zu verbrennen, wogegen die kleinen Partikel eine geringere Temperatur erfordern und deshalb im motorfernen Partikelfilter gefangen werden. Die Regeneration der Partikelfilter erfolgt über die Verbrennung mit Sauerstoff, also bei sehr hohen Temperaturen.

Aus der JP 2001 355431 ist eine Abgasanlage mit zwei Dieselpartikelfiltern ebenfalls bekannt.

Die EP 1 260 684 A2 zeigt im motornahen Bereich einen Bypass, in dem ein kleiner Partikelfilter untergebracht wird, der über ein Ventil zugeschaltet werden kann.

Motornahe Abgasfilter mit einer großen Aufnahmekapazität sowie nachgeschaltete Filter zeigt die US 4 887 427. Der entfernteste Filter soll dabei eine geringere Menge an Partikeln aufnehmen auf motornähere.

Die Erfindung schafft diese angestrebten Vorteile bei einer Abgasanlage der eingangs genannten Art dadurch, daß stromaufwärts der Partikelfiltereinheit ein motornaher Partikelaufnahmespeicher angeordnet ist, der eine Teilmenge der im Abgasstrom enthaltenen Partikel bindet und durch den eine andere Teilmenge der im Abgasstrom enthaltenen Partikel zur Partikelfiltereinheit strömt, wobei der Partikelaufnahmespeicher so nahe am Motor angeordnet ist, daß er aufgrund des NO₂-Oxidationseffekts im Betrieb regeneriert wird.

Der Partikelaufnahmespeicher läßt unabhängig vom Füllgrad, d.h. von der Menge an Partikeln in ihm, immer eine gewisse Teilmenge an Abgas samt Partikel durch, die erst in der Partikelfiltereinheit aufgefangen werden. Das heißt, der Partikelaufnahmespeicher kann nicht verblocken. Insofern unterscheidet sich der Partikelaufnahmespeicher von einem herkömmlichen Vorfilter im Stand der Technik, bei dem größere Partikel im Vorfilter aufgefangen werden sollen und nur kleinere Partikel zum Hauptfilter gelangen. Der Partikelaufnahmespeicher soll möglichst große und kleine Partikel speichern können und auch bei einem hohen Füllgrad große Partikel durchlassen. Dieser Effekt führt auch dazu, daß es bei der erfindungsgemäßen Abgasanlage nicht zu einem hohen Gegendruck (back pressure) aufgrund eines motornahen, nahezu vollständig mit Ruß gefüllten Filters kommen kann.

Im Gegensatz zum vorerwähnten Stand der Technik mit einem in der Partikelfiltereinheit nahe des Substrats angeordneten Vorfilter sieht die Erfindung einen Partikelaufnahmespeicher baulich getrennt und außerhalb der Partikelfiltereinheit angeordnet vor, der einen Teil der Partikel bindet und diese über den NO₂-Oxidationseffekt "umgewandelt" wieder ausstößt. Der Filtereinsatz der Partikelfiltereinheit (Substrat) und der Einsatz in dem Partikelaufnahmespeicher sind in Größenordnungen von wenigstens 300 mm voneinander getrennt. Der Partikelaufnahmespeicher nimmt stetig eine Teilmenge der ankommenden Partikel auf, um einen Teil hiervon als CO₂ wieder abzugeben. Diese Teilmenge an Partikeln muß von der Partikelfiltereinheit nicht mehr aufgenommen werden, so daß sich diese deutlich langsamer mit Partikeln füllt und auch deutlich seltener regeneriert werden muß. Dies erlaubt es, die Partikelfiltereinheit deutlich weiter von dem Motor entfernt anzuordnen als es eigentlich angestrebt wird. Mit zunehmendem Abstand vom Motor gibt es auch weniger Schwingungen in der Abgasanlage, so daß die Partikelfiltereinheit einerseits mit einem kostengünstigeren Substrat ausgestattet sein kann und andererseits ein geringerer Aufwand für die Gehäuseeinbindung erforderlich ist. Durch die bauliche Trennung von Partikelaufnahmespeicher und Partikelfiltereinheit ist es möglich, diese Teile an völlig verschiedenen Orten im Fahrzeug unterzubringen, was aufgrund des ohnehin geringen, zur Verfügung stehenden Bauraums sehr erwünscht ist. Da es auch in dem Partikelaufnahmespeicher zu einer gewissen, wenn auch nicht aktiv durch eine separate Einrichtung initiierten Verbrennung einer gewissen Menge an Ruß kommt, wird bei der erfindungsgemäßen Abgasanlage eine durch die Verbrennung hervorgerufene Erhöhung der Abgastemperatur stromabwärts des Partikelaufnahmespeichers stattfinden.

Gemäß der bevorzugten Ausführungsform ist der Partikelaufnahmespeicher nur in der Lage, eine geringere Partikelmenge zu binden als die Partikelfiltereinheit. Der Partikelaufnahmespeicher ist darüber hinaus vorzugsweise so ausgeführt, daß er die kleinere Teilmenge (weniger als 50 Gewichtsprozent) der in ihn einströmenden Partikel bindet. Dies erlaubt es, den Partikelaufnahmespeicher baulich relativ klein auszuführen, so daß er tatsächlich sehr motornah angeordnet werden kann. Mit zunehmender Motornähe hat er jedoch eine höhere Temperatur, was wiederum den NO₂-Oxidationseffekt verbessert, so daß der Partikelaufnahmespeicher eine hohe Leistungsfähigkeit bezogen auf die Aufnahmekapazität für Partikel aufweist. Die geringere Größe und das geringe Gewicht stellen für die Lagerung im motornahen Bereich geringere Anforderungen dar. Darüber hinaus kann aufgrund der geringeren Größe und des geringeren Volumenbedarfs höherwertiges Material verwendet werden. Umgekehrt erlaubt die motorferne Anordnung der Partikelfiltereinheit die Verwendung von kostengünstigerem Substratmaterial, insbesondere Cordierit.

Der Partikelaufnahmespeicher ist, wie bereits erwähnt, vorzugsweise durch eine Abgasrohrleitung mit der Partikelfiltereinheit strömungsmäßig verbunden bzw. baulich getrennt. Die Abgasrohrleitung hat natürlich einen wesentlich geringeren Außenquerschnitt als die Partikelfiltereinheit.

Zwischen der Partikelfiltereinheit und dem Partikelaufnahmespeicher ist gemäß der bevorzugten Ausführungsform eine Schwingungsentkoppelungseinrichtung in der Abgasrohrleitung vorgesehen, die die Abschnitte mit Partikelfiltereinheit und Partikelaufnahmespeicher miteinander verbindet. Diese Schwingungsentkoppelungseinrichtung ist per se bereits bekannt, sie trennt vorzugsweise den Krümmerabschnitt der Abgasanlage von dem sogenannten Unterbodenabschnitt. Diese Ausführungsform erlaubt es noch vielmehr, die dann weitgehend vom Motor schwingungsentkoppelte Partikelfiltereinheit kostengünstiger auszuführen, was das Material des Substrats als auch die Einbindung ins Außengehäuse und die Ausführung des Außengehäuses selbst anbelangt.

Die bevorzugte Ausführungsform sieht vor, daß der Partikelaufnahmespeicher im Krümmerbereich oder unmittelbar an diesen angrenzend angeordnet ist.

Die Partikelfiltereinheit sollte jedoch im Unterbodenabschnitt der Abgasreinigungsvorrichtung positioniert sein, wo mehr Platz für diese großvolumige Einheit zur Verfügung steht.

In der Abgasanlage sitzt bevorzugt ein Turbolader. Der Partikelaufnahmespeicher sollte unmittelbar vor dem Turbolader angeordnet sein, um dessen Belastung durch Partikel zu verringern, oder unmittelbar nach diesem angeordnet sein. Diese Anordnung sorgt in jedem Fall dafür, daß der Partikelaufnahmespeicher motomah angeordnet ist.

Stromabwärts des Partikelaufnahmespeichers und möglichst unmittelbar stromaufwärts der Partikelfiltereinheit kann gegebenenfalls eine Regenerationseinrichtung vorgesehen sein, die die Partikelfiltereinheit diskontinuierlich und vorzugsweise vom Beladungsgrad des Substrats abhängig, sensorgesteuert regeneriert. Dies soll zu einer möglichst vollständigen Regeneration des Substrats in der Partikelfiltereinheit führen.

Die Regenerationseinrichtung ist insbesondere ein Fluid- oder Kraftstoffeinleitungssystem, bei dem z.B. CO oder HC zur katalytischen exothermen Oxidation und Verbrennung des sich angesammelten Kohlenstoffs eingeleitet wird.

Bevorzugt kann natürlich ein Fluidverdampfer eingesetzt werden.

Zur Erhöhung der Temperatur in der Partikelfiltereinheit ist dieser ein Oxidationskatalysator zugeordnet.

Dieser Oxidationskatalysator kann entweder als vorgeschaltete Einheit oder als Abschnitt der Partikelfiltereinheit ausgeführt sein.

Auch dem Partikelaufnahmespeicher kann ein Oxidationskatalysator zugeordnet sein, um zur Erhöhung der Abgastemperatur im Partikelaufnahmespeicher zu führen. Auch hier wäre natürlich ein Teil des Speichermaterials entsprechend zu beschichten, oder es kann dem Partikelaufnahmespeicher ein eigener Oxidationskatalysator vorgeschaltet werden.

Die Erfindung sorgt auch für Vorteile bei Abgasanlagen mit Abgasrückführung, über die Abgas dem Motor wieder zugeführt werden kann. Der Partikelaufnahmespeicher ist nämlich vorzugsweise so in der Abgasanlage angeordnet, daß das rückgeführte Abgas den Partikelaufnahmespeicher passiert. Das bedeutet, daß mit weniger Partikeln versehenes Abgas und vor allem noch heißes Abgas wieder dem Motor zugeführt werden kann.

Der Partikelaufnahmespeicher sollte stromaufwärts eines in einer Abgasrückführleitung sitzenden Kühlers angeordnet sein, möglichst sogar stromaufwärts eines dem Kühler vorgeschalteten Bypassventils. Damit wird die Belastung von Kühler und Ventil durch Partikel reduziert.

Ferner ist es vorteilhaft, wenn dem Partikelaufnahmespeicher ein NOₓ-Katalysator, z.B. ein SCR-Katalysator (Selective Catalytic Reduction) oder ein LNT-Katalysator (Lean NOₓ-Trap), auch Speicherkatalysator genannt, nachgeschaltet ist.

Eine bevorzugte Ausführungsform des Partikelaufnahmespeichers besteht darin, einen geschäumten Keramik- oder Metalleinsatz zum Speichern der Partikel zu verwenden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Ansicht eines Kfz-Dieselmotors mit einer erfindungsgemäßen Abgasanlage und
- Figur 2 ein Flußdiagramm eines Kfz-Dieselmotors mit einer Abgasanlage gemäß einer zweiten Ausführungsform.

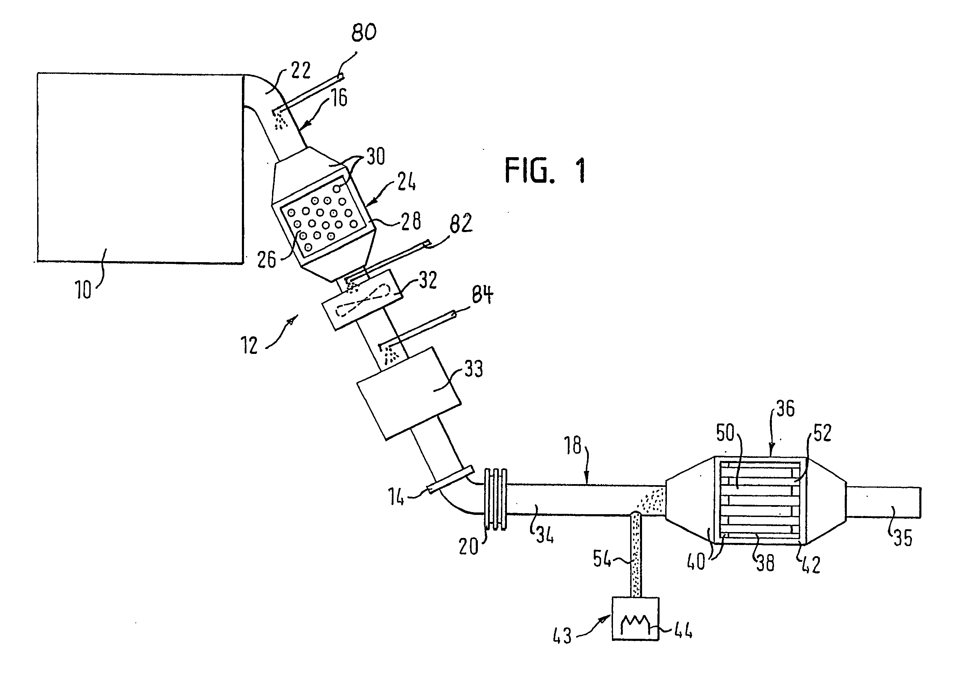

Figur 1 zeigt einen Dieselmotor 10 eines Kraftfahrzeuges und eine nachgeschaltete Abgasanlage 12. Die Abgasanlage 12 hat einen bis zu einem Flansch 14 reichenden Krümmerabschnitt 16 sowie einen sich stromabwärts des Krümmerabschnitts 16 anschließenden Unterbodenabschnitt 18, die über eine Schwingungsentkoppelungseinrichtung 20 miteinander verbunden sind.

An den Dieselmotor 10 schließt sich eine Abgasleitung mit einem ersten Rohrabschnitt 22 an, der zu einem Partikelaufnahmespeicher 24 führt, welcher motomah in der Abgasanlage 12 angeordnet ist.

Der Partikelaufnahmespeicher 24 enthält einen Einsatz 26 aus geschäumtem Keramik oder Metall, der in einem Außengehäuse 28 des Partikelaufnahmespeichers 24 angeordnet ist. Stromaufwärts des Einsatzes 26 sitzt ein Oxidationskatalysator 30. Üblicherweise jedoch wird der Oxidationskatalysator 30 weggelassen, da der stromaufwärtige Teil des Einsatzes 26 entsprechend beschichtet ist. Der Oxidationskatalysator 30 ist also normalerweise in dem Einsatz 26 integriert.

Unmittelbar stromabwärts des Partikelaufnahmespeichers 24 sitzt ein Turbolader 32 im Krümmerabschnitt 16. Alternativ könnten die Positionen von Partikelaufnahmespeicher 24 und Turbolader 32 auch vertauscht werden. Ebenfalls im Krümmerabschnitt 16, und zwar nach dem Partikelaufnahmespeicher 24 und dem Turbolader 32 ist ein NOₓ-Katalysator 33 angeordnet. Aufgrund der stromabwärtigen Lage des NOₓ-Katalysators 33 zum Partikelaufnahmespeicher 24 wird ersterer weniger stark mit Stickoxiden beladen, da der Partikelaufnahmespeicher 24 schon eine gewisse Menge an NOₓ reduziert. Der NOₓ-Katalysator 33 ist z.B. ein SCR-Katalysator (Selective Catalytic Reduction) oder ein LNT-Katalysator (Lean NOₓ-Trap), auch Speicherkatalysator genannt. Bei SCR-Katalysatoren wird als Reduktionsmittel Harnstoff in wäßriger Lösung oder, bei Feststoff, insbesondere Ammoniumcarbamat verwendet. In LNT-Katalysatoren wird NOₓ temporär gespeichert. Das Reduktionsmittel zum Regenerieren des Speichers wird während kurzer fetter Betriebsphasen motorgeneriert zur Verfügung gestellt. Zwischen den Regenerationsphasen werden die Stickoxide in Form von Nitraten auf dem Katalysator gespeichert. Der Turbolader 32 kann alternativ natürlich auch entfallen oder stromabwärts des NOₓ-Katalysators 33 angeordnet sein.

In Figur 1 sind drei mögliche Anordnungen von Harnstoffeinspritzdüsen 80, 82, 84 gezeigt. Die Einspritzdüse 80 kann stromaufwärts des Partikelaufnahmespeichers 24, unmittelbar stromaufwärts des Turboladers 32 (Düse 82) oder unmittelbar stromaufwärts des als SCR-Katalysator ausgeführten NOₓ-Katalysators 33 liegen (Düse 84). Die Anordnungen stromaufwärts des Speichers 24 oder des Turboladers 32 haben den Vorteil, daß Speicher 24 bzw. Turbolader 32 zur gleichmäßigeren Verteilung des Harnstoffs führen.

Die Schwingungsentkoppelungseinrichtung 20 besteht aus solch flexiblem Material, daß die in den Krümmerabschnitt 16 eingeleiteten Motorschwingungen möglichst nicht in den Unterbodenabschnitt 18 oder zumindest stark gedämpft an diesen Abschnitt weitergeleitet werden. Der Unterbodenabschnitt 18 umfaßt eine langgestreckte Abgasrohrleitung 34, die zu einer Partikelfiltereinheit 36 führt. Bei der Partikelfiltereinheit 36 handelt es sich um einen üblichen Dieselpartikel- oder auch Rußfilter, mit einem Substrat oder Filtereinsatz 38 aus Cordierit und einem vorgeschalteten Oxidationskatalysator 40. Auch hier kann der Oxidationskatalysator 40 entfallen, wenn der stromaufwärtige Teil des Filtereinsatzes 38 entsprechend beschichtet ist. Die Partikelfiltereinheit 36 ist nach außen hin durch ein eigenes Außengehäuse 42 abgeschlossen, welches deutlich größere Querschnittsabmaße als die Abgasrohrleitung 34 und das sich anschließende Rohrstück 36 der Abgasrohrleitung hat. Die Außengehäuse 28, 42 sind somit weit voneinander beabstandet und durch wenigstens eine einfache Abgasrohrleitung 34 voneinander getrennt.

Unmittelbar stromaufwärts des Oxidationskatalysators 40 sitzt eine Regenerationseinrichtung 43 für die Partikelfiltereinheit 36, mit einem Verdampfer 44 für eingeleiteten Dieselkraftstoff. Alternativ könnte die Regenerationseinrichtung 43 auch in die Partikelfiltereinheit 36 integriert sein.

In die Abgasanlage 12 können natürlich auch noch weitere Filtereinheiten eingebaut werden, auf die es im folgenden jedoch nicht unmittelbar ankommt, weshalb sie zur Vereinfachung weggelassen wurden.

Das Abgas strömt über die Rohrleitung 22 in den Oxidationskatalysator 30 und anschließend in den Einsatz 26. Dieser ist so ausgebildet, daß er eine Teilmenge der sich im Abgas befindlichen Partikel, insbesondere Rußpartikel, aufnimmt und speichert. Der Einsatz 26 läßt unabhängig von seinem Partikelfüllgrad immer Abgas durch sich hindurchströmen, unter anderem auch Partikel, die nicht vom Einsatz 26 gebunden werden. Die Partikelaufnahmekapazität des Einsatzes 26 ist also begrenzt. Damit der Einsatz 26 aber in jedem Fall Partikel durchläßt, besitzt er Kanäle, die einen größeren Durchmesser haben als die größten sich im Abgas befindlichen Rußpartikel. Man kann sich die unregelmäßigen Innenwandungen des Einsatzes z.B. wie Wände vorstellen, die abstehende, stromaufwärts gerichtete, offene Kiemen haben, an denen sich Partikel unabhängig von ihrer Größe anlagern können.

Aufgrund der Nähe des Partikelaufnahmespeichers 24 zum Motor 10 haben das Abgas und damit der Partikelaufnahmespeicher 24 im Betrieb eine hohe Temperatur. Diese hohe Temperatur, die jenseits von 250°C liegt, fördert den sich im Einsatz 26 einstellenden NO₂-Oxidationseffekt. Dieser führt dazu, daß der Partikelaufnahmespeicher 24 stetig im Betrieb regeneriert wird.

Der vorgesehene Oxidationskatalysator 30 erhöht noch die Temperatur im Abgas und damit die Temperatur des Einsatzes 26. Der Einsatz 26 nimmt permanent weniger als 50 % der ankommenden Partikel auf und läßt die übrigen Partikel durch sich hindurchströmen. Das Abgas gelangt zum Turbolader 32.

Das Abgas mit den verbliebenen Partikel gelangt über die Abgasrohrleitung 34 zur Partikelfiltereinheit 36, in deren Außengehäuse 42 ja ggf. bereits der Oxidationsfilter 40 untergebracht sein kann. Im Filtereinsatz 38 werden dann so gut wie alle übrigen Partikel aus dem Abgas ausgefiltert. Diese Partikel setzen sich in Einlaßkanälen 50 ab und können die Zwischenwände zu Auslaßkanälen 52 nicht durchdringen.

Da die Partikelfiltereinheit 36 im Unterbodenabschnitt 18 angeordnet ist, wird der Filtereinsatz 38 nur auf eine weitaus geringere Temperatur gebracht als der Einsatz 26. Das bedeutet, daß der NO₂-Oxidationseffekt in deutlich geringerem Ausmaß oder, bevorzugt, überhaupt nicht stattfindet. Es ist deshalb eine gezielte diskontinuierliche Regeneration der Partikelfiltereinheit 36 notwendig. Wenn im Filtereinsatz 38 ein NO₂-Oxidationseffekt vorliegen würde, käme es an den Stellen, an denen zuerst Kohlenstoff oxidiert werden würde, zu einer übermäßigen weiteren Kohlenstoffoxidation, zu Strömungsschwankungen und schließlich zu "hot spots", die schädigend für den Filtereinsatz werden können.

Sobald deshalb der Filtereinsatz 38 seine Aufnahmekapazität erschöpft hat, wird über die Regenerationseinrichtung 43 und ein Kraftstoffeinleitungssystem 54 verdampfter Kraftstoff in die Abgasrohrleitung 34 eingeleitet. Der verdampfte Kraftstoff enthält HC und CO, was im Oxidationskatalysator 40 zu einer katalytischen Oxidation des Kraftstoffs führt und die Abgastemperatur deutlich erhöht, was wiederum zur Verbrennung der Partikel im Filtereinsatz 38 führt.

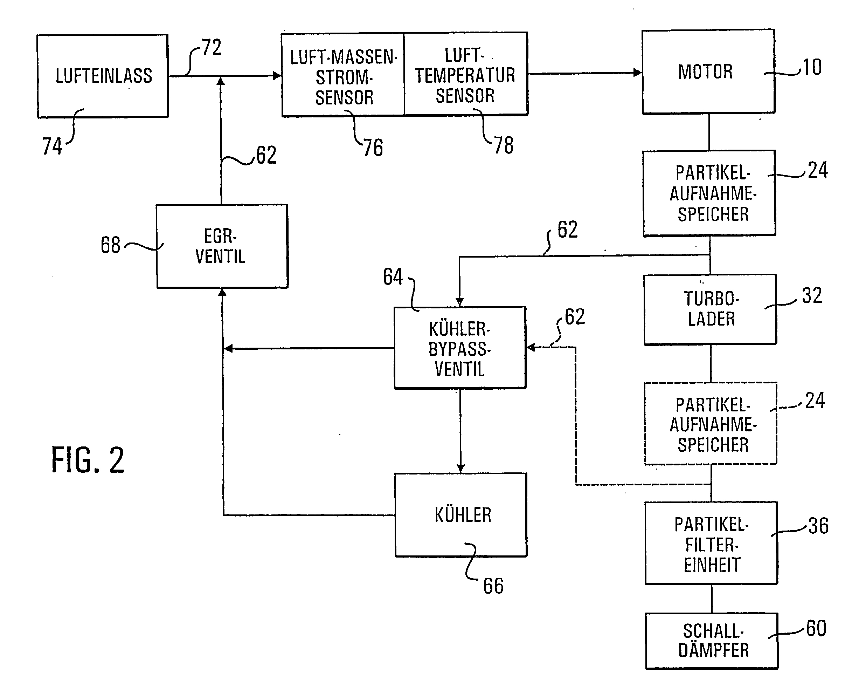

Bei einer Ausführungsform nach Figur 2 ist eine Abgasrückführung vorgesehen. Der Partikelaufnahmespeicher 24 sitzt stromaufwärts oder stromabwärts des Turboladers 32. Auch hier ist die separate, vom Partikelaufnahmespeicher 24 räumlich getrennte Partikelfiltereinheit 36 im Unterbodenabschnitt vorgesehen. Der Partikelfiltereinheit 36 wiederum ist ein Schalldämpfer 60 nachgeschaltet. Stromabwärts des Partikelaufnahmespeichers 24 lenkt eine Abgasrückführleitung 62 Abgas, das bereits eine geringere Menge an Partikeln aufgrund des Partikelaufnahmespeichers 24 hat, zu einem Kühler-Bypassventil 64. Von dort aus kann Abgas entweder über einen Kühler 66 oder direkt zu einem sogenannten EGR-Ventil 68 strömen. Das Abgas gelangt dann über die Abgasrückführleitung 62 in eine Luftzuführleitung 72 zwischen dem Lufteinlaß 74 und einem Luft-Massenstromsensor 76, dem ein Luft-Temperatursensor 78 nachgeschaltet ist.

Durch den Partikelaufnahmespeicher 24 gelingt es, Abgas mit deutlich weniger Partikeln als bisher dem Motor 10 wieder zurückzuführen. Damit verringert sich die Gefahr, daß die Partikel in Systemen der Luftzuführleitung 72 wie dem Luft-Massenstromsensor 76 oder dem Luft-Temperatursensor 78 zu Schäden führen. Auch die Ventile 64, 68 und die Leistungsfähigkeit des Kühlers 66 werden aufgrund der geringeren Partikel- oder Rußbeladung im Abgasrückführsystem verringert. Es ergibt sich eine höhere Zuverlässigkeit und eine höhere Lebensdauer der Teile in der Luftzuführleitung 72 und in der Abgasanlage, was insgesamt die Kosten verringert.

## Patentansprüche

1. Abgasanlage eines Kraftfahrzeugs mit Dieselmotor (10),
die eine Partikelfiltereinheit (36),
sowie einen stromaufwärts der Partikelfiltereinheit (36) motomah angeordneten Partikelaufnahmespeicher (24) aufweist, der eine Teilmenge der im Abgasstrom enthaltenen Partikel bindet und durch den eine andere Teilmenge der im Abgasstrom enthaltenen Partikel zur Partikelfiltereinheit (36) strömt,
**dadurch gekennzeichnet, daß**
der Partikelaufnahmespeicher (24) so nahe am Motor (10) angeordnet ist, daß er aufgrund des NO₂-Oxidationseffekts im Betrieb wenigstens teilweise regeneriert wird, und so ausgebildet ist, daß er unabhängig von seinem Füllgrad eine Teilmenge der im Abgasstrom enthaltenen Partikel zur Partikelfiltereinheit (36) gelangen läßt, wobei der Partikelaufnahmespeicher (24) einen Einsatz (26) mit Kanälen aufweist, die einen größeren Durchmesser haben als die größten sich im Abgas befindlichen Rußpartikel.

2. Abgasanlage nach Anspruch 1, **dadurch gekennzeichnet, daß** der Partikelaufnahmespeicher (24) eine geringere Partikelmenge bindet als die Partikelfiltereinheit (36).

3. Abgasanlage nach einem der vorhergehenden Ansprüche, **dadurch gekennzeichnet, daß** der Partikelaufnahmespeicher (24) über eine Abgasrohrleitung (34) mit der Partikelfiltereinheit (36) strömungsmäßig verbunden ist.

4. Abgasanlage nach Anspruch 3, **dadurch gekennzeichnet, daß** zwischen dem Partikelaufnahmespeicher (24) und der Partikelfiltereinheit (36) eine Schwingungsentkoppelungseinrichtung (20) an einer zwischen Partikelaufnahmespeicher (24) und Partikelfiltereinheit (36) angeordneten Abgasrohrleitung (34) vorgesehen ist.

5. Abgasanlage nach einem der vorhergehenden Ansprüche, **dadurch gekennzeichnet, daß** der Partikelaufnahmespeicher (24) im Krümmerabschnitt (16) der Abgasanlage oder unmittelbar an diesen anschließend angeordnet ist.

6. Abgasanlage nach einem der vorhergehenden Ansprüche, **dadurch gekennzeichnet, daß** die Partikelfiltereinheit (36) im Unterbodenabschnitt (18) der Abgasanlage angeordnet ist.

7. Abgasanlage nach einem der vorhergehenden Ansprüche, **dadurch gekennzeichnet, daß** in der Abgasanlage ein Turbolader (32) vorgesehen und der Partikelaufnahmespeicher (24) unmittelbar vor oder nach dem Turbolader (32) angeordnet ist.

8. Abgasanlage nach einem der vorhergehenden Ansprüche, **dadurch gekennzeichnet, daß** die Partikelfiltereinheit (36) einen Cordierit aufweisenden Filtereinsatz (38) aufweist.

9. Abgasanlage nach einem der vorhergehenden Ansprüche, **dadurch gekennzeichnet, daß** stromabwärts des Partikelaufnahmespeichers (24) eine der Partikelfiltereinheit (36) zugeordnete Regenerationseinrichtung (43) vorgesehen ist, die die Partikelfiltereinheit (36) diskontinuierlich regeneriert.

10. Abgasanlage nach Anspruch 9, **dadurch gekennzeichnet, daß** die Regenerationseinrichtung (43) ein Fluid-, insbesondere Kraftstoffeinleitungssystem (54) hat.

11. Abgasanlage nach Anspruch 10, **dadurch gekennzeichnet, daß** die Regenerationseinrichtung (43) einen Fluidverdampfer (44) umfaßt, um Dampf in das Abgas einzuleiten.

12. Abgasanlage nach einem der vorhergehenden Ansprüche, **dadurch gekennzeichnet, daß** der Partikelfiltereinheit (36) ein Oxidationskatalysator (40) zur Erhöhung der Temperatur in der Partikelfiltereinheit (36) zugeordnet ist.

13. Abgasanlage nach einem der vorhergehenden Ansprüche, **dadurch gekennzeichnet, daß** dem Partikelaufnahmespeicher (24) ein Oxidationskatalysator (30) zur Erhöhung der Temperatur des Abgases im Partikelaufnahmespeicher (24) zugeordnet ist.

14. Abgasanlage nach einem der vorhergehenden Ansprüche, **dadurch gekennzeichnet, daß** sie mit einer Abgasrückführung ausgestattet ist, über die Abgas dem Motor (10) zugeführt werden kann, wobei der Partikelaufnahmespeicher (24) so in der Abgasanlage angeordnet ist, daß das rückgeführte Abgas den Partikelaufnahmespeicher (24) passiert.

15. Abgasanlage nach Anspruch 14, **dadurch gekennzeichnet, daß** der Partikelaufnahmespeicher (24) stromaufwärts eines in einer Abgasrückführleitung (62) sitzenden Kühlers (66) angeordnet ist.

16. Abgasanlage nach Anspruch 15, **dadurch gekennzeichnet, daß** der Partikelaufnahmespeicher (24) stromaufwärts eines in der Abgasrückführleitung (62) angeordneten, dem Kühler (66) vorgeschalteten Bypassventils (64) sitzt.

17. Abgasanlage nach einem der vorhergehenden Ansprüche, **dadurch gekennzeichnet, daß** der Partikelaufnahmespeicher (24) einen geschäumten Keramik- oder Metalleinsatz zum Speichern der Partikel hat.

18. Abgasanlage nach einem der vorhergehenden Ansprüche, **dadurch gekennzeichnet, daß** ein NOx-Katalysator (33) stromabwärts des Partikelaufnahmespeichers (24) vorgesehen ist.

19. Abgasanlage nach einem der vorhergehenden Ansprüche, **dadurch gekennzeichnet, daß** die Partikelfiltereinheit (36) im Betrieb so entfernt von Dieselmotor (10) angeordnet ist, daß in ihr aufgrund zu tiefer Betriebstemperatur kein stetiger NO2-Oxidationseffekt stattfindet.

## Claims

1. An exhaust system of a motor vehicle with a diesel engine (10),
the exhaust system including a particulate filter unit (36)
and a particulate receiving accumulator (24) which is arranged upstream of the particulate filter unit (36) close to the engine and binds a partial quantity of the particulates contained in the exhaust gas flow, with another partial quantity of the particulates contained in the exhaust gas flow flowing through the particulate receiving accumulator (24) to the particulate filter unit (36),
**characterized in that**
the particulate receiving accumulator (24) is arranged so close to the engine (10) that it is at least partly regenerated during operation owing to the NO₂ oxidation effect, and is designed such that, irrespective of its filling degree, it allows a partial quantity of the particulates contained in the exhaust gas flow to reach the particulate filter unit (36), the particulate receiving accumulator (24) including an insert (26) having ducts that have a larger diameter than the largest soot particulates contained in the exhaust gas.

2. The exhaust system according to claim 1, **characterized in that** the particulate receiving accumulator (24) binds a smaller quantity of particulates than the particulate filter unit (36).

3. The exhaust system according to either of the preceding claims, **characterized in that** the particulate receiving accumulator (24) is in fluid communication with the particulate filter unit (36) via an exhaust pipe (34).

4. The exhaust system according to claim 3, **characterized in that** between the particulate receiving accumulator (24) and the particulate filter unit (36), a vibration isolating arrangement (20) is provided on an exhaust pipe (34) arranged between the particulate receiving accumulator (24) and the particulate filter unit (36).

5. The exhaust system according to any of the preceding claims, **characterized in that** the particulate receiving accumulator (24) is arranged in or immediately adjoining the manifold portion (16) of the exhaust system.

6. The exhaust system according to any of the preceding claims, **characterized in that** the particulate filter unit (36) is arranged in the underbody portion (18) of the exhaust system.

7. The exhaust system according to any of the preceding claims, **characterized in that** a turbocharger (32) is provided in the exhaust system and the particulate receiving accumulator (24) is arranged immediately upstream or downstream of the turbocharger (32).

8. The exhaust system according to any of the preceding claims, **characterized in that** the particulate filter unit (36) has a filter insert (38) including cordierite.

9. The exhaust system according to any of the preceding claims, **characterized in that** provided downstream of the particulate receiving accumulator (24) is a regeneration device (43) which is associated with the particulate filter unit (36) and discontinuously regenerates the particulate filter unit (36).

10. The exhaust system according to claim 9, **characterized in that** the regeneration device (43) has a fluid introduction system, in particular a fuel introduction system (54).

11. The exhaust system according to claim 10, **characterized in that** the regeneration device (43) comprises a fluid vaporizer (44) for introducing vapor into the exhaust gas.

12. The exhaust system according to any of the preceding claims, **characterized in that** associated with the particulate filter unit (36) is an oxidation catalytic converter (40) to raise the temperature in the particulate filter unit (36).

13. The exhaust system according to any of the preceding claims, **characterized in that** associated with the particulate receiving accumulator (24) is an oxidation catalytic converter (30) to raise the temperature of the exhaust gas in the particulate receiving accumulator (24).

14. The exhaust system according to any of the preceding claims, **characterized in that** it is equipped with an exhaust gas recirculation by which exhaust gas can be supplied to the engine (10), the particulate receiving accumulator (24) being arranged in the exhaust system such that the recirculated exhaust gas passes the particulate receiving accumulator (24).

15. The exhaust system according to claim 14, **characterized in that** the particulate receiving accumulator (24) is arranged upstream of a cooler (66) seated in an exhaust gas recirculation pipe (62).

16. The exhaust system according to claim 15, **characterized in that** the particulate receiving accumulator (24) is seated upstream of a bypass valve (64) arranged in the exhaust gas recirculation pipe (62) and connected upstream of the cooler (66).

17. The exhaust system according to any of the preceding claims, **characterized in that** the particulate receiving accumulator (24) has a foamed ceramic or metal insert for accumulating the particulates.

18. The exhaust system according to any of the preceding claims, **characterized in that** an NOₓ catalytic converter (33) is provided downstream of the particulate receiving accumulator (24).

19. The exhaust system according to any of the preceding claims, **characterized in that** the particulate filter unit (36) is arranged at such a distance from the diesel engine (10) during operation that no continuous NO₂ oxidation effect occurs therein on account of too low an operating temperature.

## Revendications

1. Système d'échappement d'un véhicule automobile avec moteur diesel (10),
qui présente une unité de filtre à particules (36)
ainsi qu'un accumulateur de réception de particules (24) agencé près du moteur en amont de l'unité de filtre à particules (36), lequel lie une quantité partielle des particules contenues dans le flux de gaz d'échappement et s'écoule vers l'unité de filtre à particules (36) à travers une autre quantité partielle des particules contenues dans le flux de gaz d'échappement,
**caractérisé en ce que**
l'accumulateur de réception de particules (24) est agencé si près du moteur (10) qu'en raison de l'effet d'oxydation de NO₂, il est régénéré au moins partiellement pendant le fonctionnement, et il est réalisé de telle sorte qu'indépendamment de son niveau de remplissage, il fait parvenir à l'unité de filtres (36) une quantité partielle des particules contenues dans le flux de gaz d'échappement, l'accumulateur de réception de particules (24) présentant un insert (26) avec des canaux qui ont un plus grand diamètre que les plus grandes particules de suie se trouvant dans le gaz d'échappement.

2. Système d'échappement selon la revendication 1, **caractérisé en ce que** l'accumulateur de réception de particules (24) lie une quantité de particules plus faible que l'unité de filtre à particules (36).

3. Système d'échappement selon l'une des revendications précédentes, **caractérisé en ce que** l'accumulateur de réception de particules (24) est en communication fluidique avec l'unité de filtre à particules (36) via un tuyau d'échappement (34).

4. Système d'échappement selon la revendication 3, **caractérisé en ce que** entre l'accumulateur de réception de particules (24) et l'unité de filtre à particules (36) est prévu un dispositif de découplage de vibrations (20) au niveau d'un tuyau d'échappement (34) agencé entre l'accumulateur de réception de particules (24) et l'unité de filtre à particules (36).

5. Système d'échappement selon l'une des revendications précédentes, **caractérisé en ce que** l'accumulateur de réception de particules (24) est agencé dans le tronçon de coude (16) du système d'échappement ou directement raccordé à celui-ci.

6. Système d'échappement selon l'une des revendications précédentes, **caractérisé en ce que** l'unité de filtre à particules (36) est agencée dans le tronçon de dessous de caisse (18) du système d'échappement.

7. Système d'échappement selon l'une des revendications précédentes, **caractérisé en ce qu'**une turbosoufflante (32) est prévue dans le système d'échappement et l'accumulateur de réception de particules (24) est agencé directement en amont ou en aval de la turbosoufflante (32).

8. Système d'échappement selon l'une des revendications précédentes, **caractérisé en ce que** l'unité de filtre à particules (36) présente un insert de filtre (38) présentant une cordiérite.

9. Système d'échappement selon l'une des revendications précédentes, **caractérisé en ce qu'**en aval de l'accumulateur de réception de particules (24) est prévu un dispositif de régénération (43) associé à l'unité de filtre à particules (36) qui régénère l'unité de filtre à particules (36) de façon discontinue.

10. Système d'échappement selon la revendication 9, **caractérisé en ce que** le dispositif de régénération (43) a un système d'introduction de fluide, en particulier un système d'introduction de carburant (54).

11. Système d'échappement selon la revendication 10, **caractérisé en ce que** le dispositif de régénération (43) comprend un évaporateur de fluide (44) pour introduire de la vapeur dans le gaz d'échappement.

12. Système d'échappement selon l'une des revendications précédentes, **caractérisé en ce qu'**à l'unité de filtre à particules (36) est associé un catalyseur à oxydation (40) pour augmenter la température du gaz d'échappement dans l'unité de filtre à particules (36).

13. Système d'échappement selon l'une des revendications précédentes, **caractérisé en ce qu'**à l'accumulateur de réception de particules (24) est associé un catalyseur à oxydation (30) pour augmenter la température du gaz d'échappement dans l'accumulateur de réception de particules (24).

14. Système d'échappement selon l'une des revendications précédentes, **caractérisé en ce qu'**il est équipé d'une recirculation des gaz d'échappement via laquelle du gaz d'échappement peut être amené au moteur (10), l'accumulateur de réception de particules (24) étant agencé de telle sorte dans le système d'échappement que le gaz d'échappement remis en circulation passe par l'accumulateur de réception de particules (24).

15. Système d'échappement selon la revendication 14, **caractérisé en ce que** l'accumulateur de réception de particules (24) est agencé en amont d'un radiateur (66) situé dans une conduite de recirculation de gaz d'échappement (62).

16. Système d'échappement selon la revendication 15, **caractérisé en ce que** l'accumulateur de réception de particules (24) est situé en amont d'une soupape de dérivation (64) montée en amont du radiateur (66) et agencée dans la conduite de recirculation de gaz d'échappement (62).

17. Système d'échappement selon l'une des revendications précédentes, **caractérisé en ce que** l'accumulateur de réception de particules (24) possède un insert de céramique ou de métal pour accumuler les particules.

18. Système d'échappement selon l'une des revendications précédentes, **caractérisé en ce qu'**il est prévu un catalyseur de NOx (33) en aval de l'accumulateur de réception de particules (24).

19. Système d'échappement selon l'une des revendications précédentes, **caractérisé en ce que** lors du fonctionnement, l'unité de filtre à particules (36) est agencée aussi loin du moteur diesel (10) qu'il ne se produit pas d'effet continu d'oxydation de NO₂ en raison d'une température de fonctionnement trop basse.
